# EUROPEAN PATENT SPECIFICATION

(11) **EP 1 199 264 B1**
(45) Date of publication and mention of the grant of the patent: **19.03.2008**
(21) Application number: 01124687.3
(22) Date of filing: 16.10.2001
(51) Int. Cl.: B65G 47/52, B65B 19/32

(54) **Cigarette reject unit**
Aussondereinheit für Zigaretten
Unité de rejet de cigarettes

(30) Priority: 17.10.2000 IT BO000605
(43) Date of publication of application: 24.04.2002
(73) Proprietor: G.D SOCIETÀ PER AZIONI, 40133 Bologna (BO) (IT)
(72) Inventor: Spatafora, Mario, 40100 Bologna (IT)
(74) Representative: Eccetto, Mauro

(56) References cited:
- EP-A- 0 982 249
- EP-A- 1 020 357
- WO-A-01/79092
- US-A- 2 851 146
- US-A- 4 214 663
- US-A- 4 489 736

## Description

The present invention relates to a machine for packing cigarettes and a method for rejecting groups of cigarettes.

The present invention may be used to particular advantage on cigarette packing machines, for rejecting products such as faulty groups of cigarettes.

As is known, on cigarette packing machines, the cigarettes are normally fed in bulk into a hopper, at the output of which, the cigarettes are formed into orderly groups, each containing a predetermined number of cigarettes in a given configuration, and are normally fed onto a conveyor with pockets which are arrested successively at the hopper output so as each to receive a respective group of cigarettes.

Once loaded into the conveyor pockets, the groups of cigarettes are fed onto a wrapping line, along which the groups undergo a number of wrapping operations to form respective finished packets of cigarettes. More specifically, the wrapping operations normally comprise wrapping each group in a respective sheet of foil to form a first or inner wrapping, and wrapping each first wrapping in a respective sheet of paper or cardboard to form a second or outer wrapping and so form a finished packet of cigarettes.

Known packing machines comprise a number of control stations located along the pocket conveyor and wrapping line to ensure correct formation of the groups of cigarettes, correct tobacco fill at the ends of the cigarettes in each group, and correct formation of the first and second wrappings.

To reject any failed groups of cigarettes, each control station is equipped with a reject unit defining the actuating member of a control assembly, which, in addition to the reject unit, also comprises one or more sensors at the control station, and a central control unit to which the reject unit is connected.

In known reject units, rejection is normally performed by a reciprocating pusher, which, moving through the pocket or seat housing the faulty group, moves to and from a work position to push the group out into a reject bin.

Known reject units of the type described have several drawbacks in terms of both size and mechanical complexity.

That is, the pusher, on the one hand, must have enough space, in the operating direction, for it to move to and from the work position, and, on the other, must be provided with respective mechanical actuating members, which are relatively complex and bulky.

The above drawbacks of a more or less general nature are further compounded by the slow back-and-forth movement of the pusher, which is obviously a serious handicap when cooperating with pockets or seats traveling continuously or in steps past the pusher. In particular, whereas the forward stroke into the work position represents a useful stroke of the pusher, the return stroke serves no purpose other than to slow down the reject operation as a whole.

Cooperation between the pusher and the pockets or seats traveling past it is fairly intricate in the case of continuously-moving packing machines. That is, when a pocket, or seat, is fed continuously past the pusher of a reject unit, the pusher must move to and from the work position while the relative speed of the pusher and pocket is zero in the traveling direction of the pocket. This means providing an additional conveyor to synchronize travel of the pusher with that of the pocket along a path portion in which the pusher and pocket are positioned side by side.

The additional conveyor obviously poses further serious drawbacks in terms of cost, space, and the mechanical complexity and inertia of the additional conveyor itself.

Moreover, synchronous travel of the pocket and the pusher must last long enough, i.e. the path portion along which the pusher and the pocket are positioned side by side must be long enough, for the pusher to at least move back and forth. In addition, however, to the speed with which the pusher moves back and forth, the length of the path portion also depends on the travelling speed of the pockets, so that, for a given back-and-forth speed of the pusher, an increase in the travelling speed of the pockets - as on faster-operating packing machines - calls for an increase in the length of the path portion along which the pusher and pocket are positioned side by side.

And, obviously, the faster the output rate of the packing machine is, the more serious the above space problems become.

EP 0 982 149 A1 discloses a control apparatus that automatically maintains line balance and prevents part jam up in a manufacturing process by selectively removing parts from a conveyor line coupling successive manufacturing stations. The apparatus includes a stationary proximity sensor and air knife mounted with respect to the conveyor line, a timer, a solenoid-operated air valve for coupling the air knife to a source of compressed air, and an excess part bin adjacent the conveyor line. When the proximity sensor is closed for more than a first predetermined interval, an impending jam-up of parts is detected, and the timer activates the solenoid-operated air valve, causing the air knife to blow one or more parts from the conveyor line into the excess parts bin.

It is an object of the present invention to provide a machine for packing cigarettes and a method for rejecting groups of cigarettes designed to solve all or some of the aforementioned problems typically associated with the known state of the art.

According to the present invention, there is provided a machine for packing cigarettes as recited in Claim 1.

Moreover, according to the present invention, there is provided a method for packing cigarettes as recited in Claim 4.

Non-limiting embodiments of the present invention will be described by way of examples with reference to the accompanying drawings, in which:
Figure 1 shows a schematic front view, with parts removed for clarity, of a first embodiment of the reject unit according to the present invention;
Figure 2 shows a schematic rear view, with parts removed for clarity, of the Figure 1 reject unit;
Figure 3 shows a schematic plan view, with parts removed for clarity, of the Figure 1 and 2 reject unit;
Figure 4 shows a schematic plan view, with parts removed for clarity, of a second embodiment of the reject unit according to the present invention.

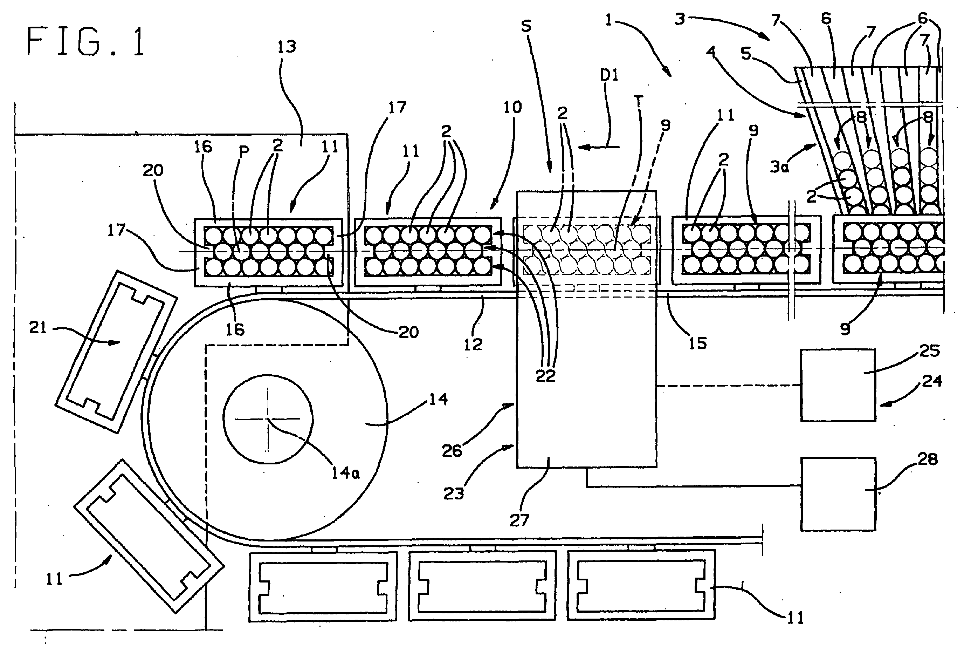

Number 1 in Figure 1 indicates as a whole an input portion of a machine for packing cigarettes 2.

Portion 1 comprises a known hopper 3, of which only a bottom end portion 3a is shown in detail. In known manner not shown, cigarettes 2 are fed downwards into a top portion of hopper 3, where they are arranged horizontally side by side in bulk, and then fall by force of gravity into portion 3a, which comprises a number of bottom outlets 4, only one of which is shown in Figure 1.

Each outlet 4 is defined laterally by two walls 5 (only one shown in Figure 1) between which are interposed a number of partitions 6 defining, together with walls 5, a number of feed channels 7 inside which cigarettes 2 fall, by force of gravity and in respective columns 8, to a known group forming device (not shown) for forming orderly groups 9 of cigarettes 2.

In the present text the term "group of cigarettes" means a plurality of cigarettes 2 not enclosed in any envelope, i.e. a plurality of cigarettes 2 which are suitable to form the content of a packet.

In known manner not shown, the device forming groups 9 of cigarettes 2 cooperates with a conveyor 10 having pockets 11, and feeds a respective group 9 into each of pockets 11 arrested successively at the forming device and outlets 4 of hopper 3.

Conveyor 10 comprises a belt 12 for conveying pockets 11 and along which pockets 11 are equally spaced and conveyed, in a direction D1, along a straight, horizontal path P extending from outlets 4 of hopper 3 to a line 13 for wrapping groups 9 of cigarettes 2.

Line 13 is of known type and therefore shown schematically in block form in the accompanying drawings.

Belt 12 is looped about two pulleys 14 (only one shown in the accompanying drawings) having respective horizontal axes 14a, and which define, on belt 12, a top work branch 15 extending horizontally along path P and on a level with outlets 4 of hopper 3 and said device (not shown) for forming groups 9.

Each pocket 11 is in the form of a substantially parallelepiped-shaped box, and is defined laterally by four substantially flat walls : more specifically, by two major walls 16 parallel to branch 15, and two minor walls or sides 17 extending squarely from walls 16.

Inside each pocket 11, each of the two minor walls 17 has an inner projection 20, which is located in an intermediate position between the two walls 16, extends parallel to walls 16 along the whole length of wall 17 in a direction D2 perpendicular to direction D1, and projects transversely inside pocket 11 by a width substantially equal to half the diameter of cigarettes 2.

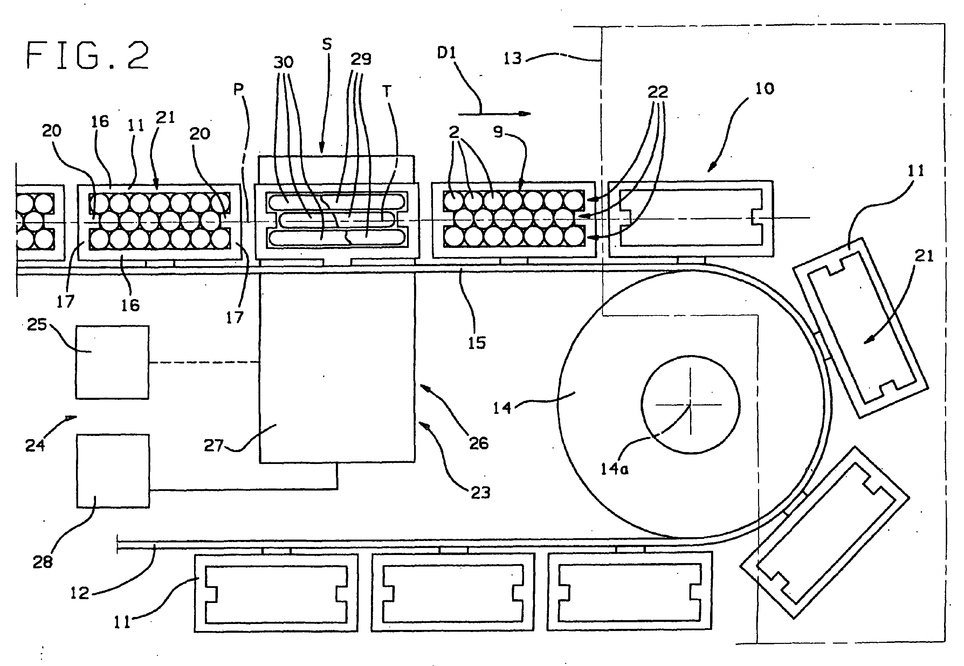

Walls 17, with respective projections 20, and walls 16 define, inside pocket 11, a compartment 21 for receiving and retaining a group 9 of cigarettes 2 defined by three superimposed layers 22 of cigarettes 2 arranged with their respective longitudinal axes in direction D2. Of the three layers 22, the central layer 22 is interposed between the two projections 20 in direction D1, and comprises one cigarette less than the outer layers 22. In the example shown, and with reference to Figures 1 and 2, each group 9 comprises twenty cigarettes 2 arranged in two outer layers 22 of seven cigarettes 2 each, and one central layer 22 of six cigarettes 2.

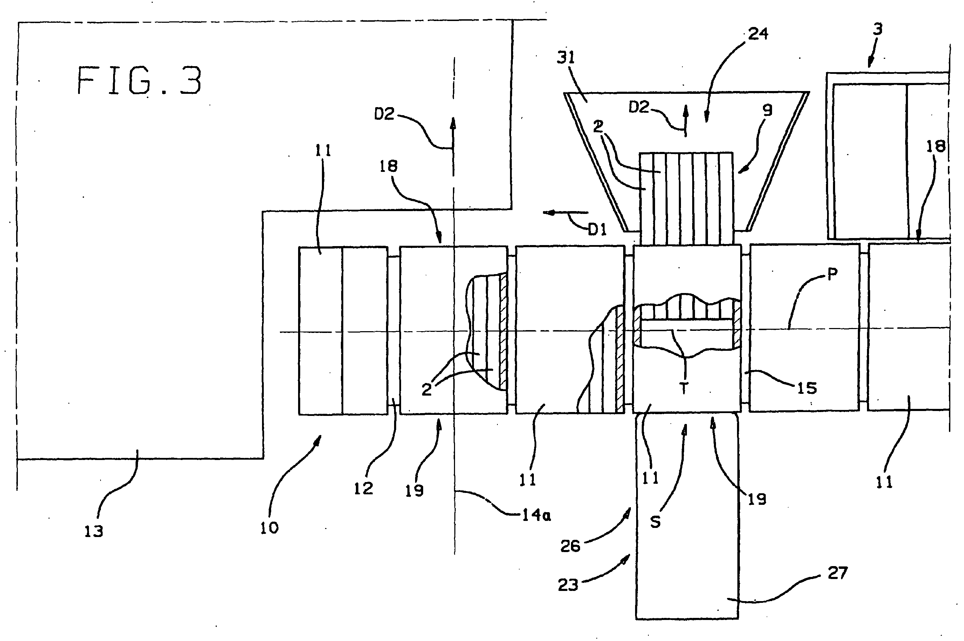

As shown in Figure 3, walls 16 and 17 of each pocket 11 define, in direction D2, two opposite open ends 18, 19 of pocket 11, of which the one indicated 18 is positioned cyclically facing hopper 3 to permit transfer of cigarettes 2 from hopper 3 to pocket 11.

Conveyor 10 is powered, in known manner not shown, to feed pockets 11 in steps through a reject station S located along a given portion T of path P and comprising a reject unit 23 for rejecting faulty groups 9, i.e. groups 9 formed incorrectly or comprising one or more faulty cigarettes 2.

With reference to Figures 1 and 2, reject unit 23 defines the operating member of a control and reject assembly 24, which, in addition to unit 23, also comprises one or more sensors (not shown) located at one or more stations (not shown) for controlling groups 9, and a central control unit 25 to which reject unit 23 is connected.

Unit 23 comprises a pneumatic actuator 26, which may be activated by central control unit 25 when a pocket 11 is arrested in front of actuator 26 and on the basis of the information supplied to central control unit 25 by the sensors (not shown) located along path P, upstream from actuator 26 in direction D1.

Actuator 26 comprises a tank 27 of precompressed air, which is connected to an air compressor 28 for precharging tank 27 to a given internal pressure. The precharge pressure and the capacity of tank 27 are such as to enable actuator 26 to perform a given number of consecutive reject operations, while at the same time obtaining a relatively compact tank 27 that can be accommodated easily at reject station S.

With reference to Figures 2 and 3, tank 27 comprises three elongated, substantially rectangular outlets 29, of which a central outlet 29 is located in an intermediate position between two outer outlets 29. Outlets 29 extend predominantly in direction D1 and are so positioned with respect to conveyor 10 as to face the open end 19 of a pocket 11 arrested at reject station S. More specifically, each of the two outer outlets 29 is positioned to substantially contact a substantially rectangular front portion of the corresponding outer layer 22 of cigarettes 2 facing outwards from end 19 of pocket 11, and has an outflow area whose dimensions, in direction D1 and in vertical direction, are substantially equal to the corresponding dimensions of the area of said front portion of outer layer 22. Similarly, central outlet 29 is positioned to substantially contact a substantially rectangular front portion of the corresponding central layer 22 of cigarettes 2 facing outwards from end 19 of pocket 11, and has an outflow area whose dimensions, in direction D1 and in vertical direction, are substantially equal to the corresponding dimensions of the area of said front portion of central layer 22.

In addition to tank 27, pneumatic actuator 26 also comprises a known discharge valve 30 for each of the three outlets 29, to open and close outlets 29 simultaneously and substantially instantaneously.

Control and reject assembly 24 also comprises a bin 31 located at reject station S, on the opposite side of conveyor 10 to actuator 26 and slightly beneath branch 15, to receive and house the groups 9 rejected by actuator 26.
Operation of reject unit 23 will now be described as of when a pocket 11 on conveyor 10 receives a respective group 9 of cigarettes 2 from hopper 3.

Pocket 11 is fed in steps along path P through one or more control stations (not shown) and is subsequently arrested at reject station S.

If group 9 is passed, pocket 11 is step-fed through station S to wrapping line 13 with group 9 still inside. Conversely, if failed, group 9 is subjected, by actuator 26 and under the control of central control unit 25, to a pneumatic force to expel the group from pocket 11 in direction D2 and into bin 31.

More specifically, when valves 30 are opened by central control unit 25, the three outlets 29 are opened simultaneously and substantially instantaneously, so that the faulty group 9 is subjected to a pulsating jet of compressed air through end 19 of respective pocket 11.

By virtue of outlets 29 being opened simultaneously and substantially instantaneously, and being positioned, at reject station S, substantially contacting the respective said front portions of layers 22 of faulty group 9, the pulsating jet of compressed air has a thrust front of the same size as, and of an intensity distributed substantially uniformly over, the front of faulty group 9. This, together with the fact that tank 27 can be easily precharged to a relatively high pressure, ensures a relatively powerful thrust by which to push the cigarettes 2 in faulty group 9 simultaneously and as a whole from respective pocket 11.

In a first variation, tank 27 defines an end extension of compressor 28. In which case, outlets 29 are connected directly to compressor 28, which is larger than in the previous case to ensure the same thrust as that provided by tank 27.

In a further variation, conveyor 10 is powered in known manner not shown to feed pockets 11 continuously and uniformly at least along portion T of path P at which unit 23 is installed. In which case, reject unit 23 operates as described above, but as pockets 11 travel past unit 23. In other words, valves 30 are opened by central control unit 25 in time with the passage of pockets 11 past actuator 26.

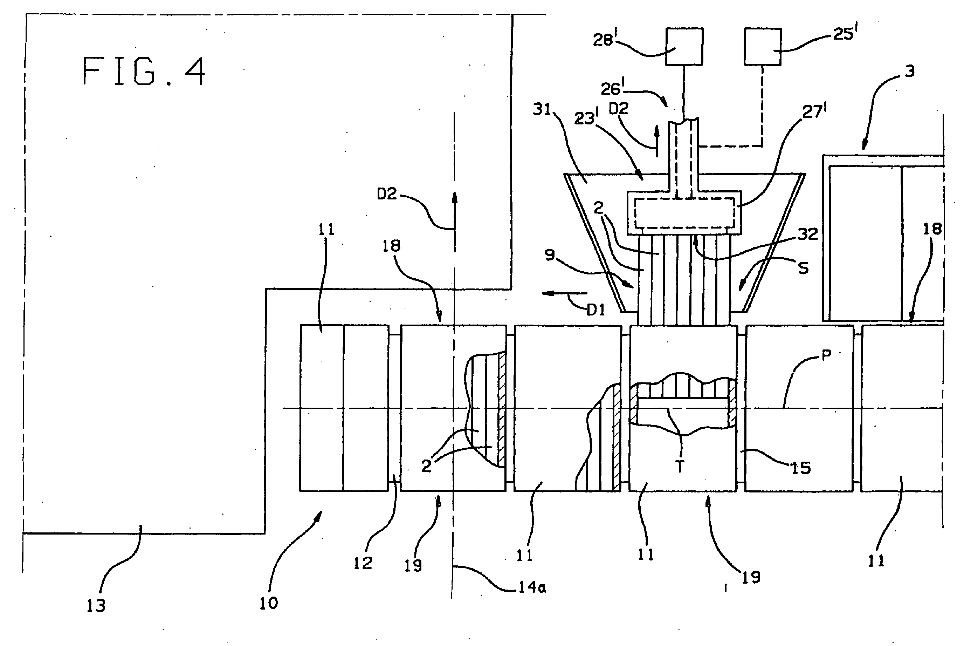

Figure 4 shows a variation 23' of reject unit 23 described with reference to Figures 1 to 3.

For the sake of simplicity, the component parts of the reject unit are also indicated, in the following description, using the same reference numbers, plus a ('), as for the corresponding parts of reject unit 23 described above.

Unit 23' comprises a pneumatic actuator 26' controlled by a central control unit 25' on the basis of information received by central control unit 25' from sensors (not shown) located along path P, upstream from actuator 26' in direction D1.

Actuator 26' comprises a pneumatic extractor 27', which is located at reject station S, on the end 18 side of pockets 11 and over bin 31, is connected to a suction source 28', and has a suction face 32 comprising three elongated suction outlets identical to outlets 29 of tank 27 described above.

Conveyor 10 is powered in known manner not shown to feed pockets 11 in steps along path P through reject station S, to enable extractor 27' to operate during stoppage of a pocket 11 containing a faulty group 9.

Extractor 27' is movable, in direction D2, between a forward suction position, in which, through end 18 of the stationary pocket 11 at station S, face 32 contacts the ends of the filters of cigarettes 2, and a withdrawn release position, in which face 32 is separated from end 18 by a distance greater than the length of cigarettes 2 in direction D2.

Operation of unit 23' is easily deducible from the foregoing description, with no further explanation required.

In a variation of the Figure 4 embodiment, conveyor 10 is powered in known manner not shown to feed pockets 11 continuously and uniformly at least along portion T of path P at which unit 23' is installed. In which case, reject unit 23' operates as described above, but as pockets 11 travel past unit 23'. In other words, the suction exerted on faulty group 9 is controlled by central control unit 25' in time with the passage of relative pocket 11 past actuator 26'; in which case, unit 23' is preferably provided in known manner not shown with a number of actuators 26' fed forward by an additional conveyor in time with pockets 11 during the extraction of each faulty group 9 from respective pocket 11.

## Claims

1. A machine for packing cigarettes (2) comprising conveying means (10), which has a plurality of pockets or seats (11) each for conveying a respective group (9) of cigarettes (2) along a given path (P), a line (13) for wrapping groups (9) of cigarettes (2) and a unit (23; 23') for rejecting groups (9) of cigarettes (2) upstream of the line (13) for wrapping groups (9) of cigarettes (2); said machine for packing cigarettes (2) being **characterized in that** the unit (23; 23') for rejecting groups (9) of cigarettes (2) comprises pneumatic actuating means (26; 26') located along said path (P) and for directing, onto each group (9) of cigarettes (2) for rejection, a pulsating jet of compressed air to expel the group (9) of cigarettes (2) from the respective said pocket or seat (11) in time with the passage, or during a stop, of said pocket or seat (11) in front of the pneumatic actuating means (26; 26'); said pneumatic actuating means (26) comprise a tank (27) of precompressed air having at least one outlet (29) for said pulsating jet of compressed air, a discharge valve (30) associated with said outlet (29), and an air compressor (28) connected to said tank (27) to precharge the tank (27) to a given internal pressure; the pulsating jet of compressed air has a thrust front of the same size as the front of the group (9) of cigarettes (2).

2. A machine as claimed in Claim 1, wherein said thrust front, is of substantially uniform intensity.

3. A machine as claimed in any one of Claims 1 to 2, wherein said pulsating jet of compressed air is directed crosswise to said given path (P).

4. A method for rejecting groups (9) of cigarettes (2); the method providing that the groups (9) of cigarettes (2) are, each, fed along a given path (P) in a respective pocket or seat (11) of conveying means (10) to a wrapping line (13) for wrapping groups (9) of cigarettes (2), and that a force is exerted, on each group (9) of cigarettes (2) for rejection, to expel the groups (9) of cigarettes (2) from said path (P); the method being **characterised in that** pneumatic actuating means (26; 26') direct a pulsating jet of compressed air on each group (9) of cigarettes (2) for rejection, to deviate the groups (9) of cigarettes (2) from said path (P) in time with the passage, or during a stop, of said group (9) of cigarettes (2) in front of the pneumatic actuating means (26; 26') upstream of the wrapping line (13); said pulsating jet of compressed air has a thrust front of substantially uniform intensity; and of the same size as the front of the group (9) of cigarettes (2).

5. A method as claimed in Claim 4, wherein said pulsating jet of compressed air is directed crosswise to said given path (P).

## Patentansprüche

1. Maschine zum Verpacken von Zigaretten (2), umfassend Fördermittel (10), das eine Mehrzahl von Taschen oder Sitzen (11) jeweils zum Fördern einer jeweiligen Gruppe (9) von Zigaretten (2) entlang einem gegebenen Pfad bzw. Weg (P) aufweist, eine Straße bzw. Linie (13) zum Umwickeln von Gruppen (9) von Zigaretten (2) und eine Einheit (23; 23') zum Ausstoßen von Gruppen (9) von Zigaretten (2) stromaufwärts der Straße (13) zum Umwickeln von Gruppen (9) von Zigaretten (2); wobei die Maschine zum Verpacken von Zigaretten (2) **dadurch gekennzeichnet ist, dass** die Einheit (23; 23') zum Ausstoßen von Gruppen (9) von Zigaretten (2) pneumatische Betätigungsmittel (26; 26') umfasst, die entlang dem Weg (P) angeordnet sind und die einen pulsierenden Strahl von komprimierter Luft bzw. Druckluft auf jede Gruppe (9) von Zigaretten (2) zum Ausstoß richten, um die Gruppe (9) von Zigaretten (2) von der jeweiligen Tasche oder Sitz (11) auszuwerfen, wenn die Tasche oder Sitz (11) vor den pneumatischen Betätigungsmitteln (26; 26') vorbeiläuft oder während sie vor diesen stoppt; wobei die pneumatischen Betätigungsmittel (26) einen Tank (27) mit vorkomprimierter Luft umfassen, der wenigstens einen Auslass (29) für den pulsierenden Strahl von Druckluft, ein dem Auslass (29) zugeordnetes Auslassventil (30) und einen Luftkompressor (28) aufweist, der mit dem Tank (27) verbunden ist, um den Tank (27) auf einen gegebenen Innendruck vorzuladen; wobei der pulsierende Strahl von Druckluft eine Schubfront mit der gleichen Größe wie die Front der Gruppe (9) von Zigaretten (2) aufweist.

2. Maschine nach Anspruch 1, wobei die Schubfront eine im Wesentlichen einheitliche Intensität hat.

3. Maschine nach einem der Ansprüche 1 bis 2, wobei der pulsierende Strahl von Druckluft quer zu dem gegebenen Weg (P) gerichtet ist.

4. Verfahren zum Ausstoßen von Gruppen (9) von Zigaretten (2), wobei das Verfahren vorsieht, dass die Gruppen (9) von Zigaretten (2) jeweils entlang einem gegebenen Pfad bzw. Weg (P) in einer jeweiligen Tasche oder Sitz (11) von Fördermitteln (10) einer Umwicklungsstraße bzw. -linie (13) zum Umwikkeln von Gruppen (9) von Zigaretten (2) zugeführt werden und dass eine Kraft auf jede Gruppe (9) von Zigaretten (2) zum Ausstoß ausgeübt wird, um die Gruppen (9) von Zigaretten (2) von dem Weg (P) auszuwerfen; wobei das Verfahren **dadurch gekennzeichnet ist, dass** die pneumatischen Betätigungsmittel (26; 26') einen pulsierenden Strahl von komprimierter Luft bzw. Druckluft auf jede Gruppe (9) von Zigaretten (2) zum Ausstoß zu richten, um die Gruppen (9) von Zigaretten (2) von dem Weg (P) abzulenken bzw. umzuleiten, wenn die Gruppe (9) von Zigaretten (2) vor den pneumatischen Betätigungsmitteln (26; 26') stromaufwärts der Umwicklungsstraße (13) vorbeiläuft oder während sie vor diesen stoppt; wobei der pulsierende Strahl von Druckluft eine Schubfront von im Wesentlichen einheitlicher Intensität und mit der gleichen Größe wie die Front der Gruppe (9) von Zigaretten (2) aufweist.

5. Verfahren nach Anspruch 4, wobei der pulsierende Strahl von Druckluft quer zu dem gegebenen Weg (P) gerichtet wird.

## Revendications

1. Machine pour emballer des cigarettes (2) comprenant des moyens de transport (10), qui ont une pluralité de poches ou sièges (11), chacun pour transporter un groupe respectif (9) de cigarettes (2) le long d'une trajectoire (P) donnée, une chaîne (13) pour emballer des groupes (9) de cigarettes (2) et une unité (23 ; 23') pour rejeter des groupes (9) de cigarettes (2) en amont de la chaîne (13) pour emballer des groupes (9) de cigarettes (2), ladite machine pour emballer des cigarettes (2) étant **caractérisée en ce que** l'unité (23 ; 23') pour rejeter des groupes (9) de cigarettes (2) comprend des moyens d'actionnement pneumatiques (26 ; 26') situés le long de ladite trajectoire (P) et pour diriger, sur chaque groupe (9) de cigarettes (2) pour le rejet, un jet de pulsation d'air comprimé pour expulser le groupe (9) de cigarettes (2) de ladite poche ou siège (11) respectif au moment du passage, ou pendant un arrêt de ladite poche ou siège (11) en face des moyens d'actionnement pneumatiques (26 ; 26') ; lesdits moyens d'actionnement pneumatiques (26) comprennent un réservoir (27) d'air pré-comprimé ayant au moins une sortie (29) pour ledit jet de pulsation d'air comprimé, une soupape de décharge (30) associée à ladite sortie (29), et un compresseur d'air (28) raccordé audit réservoir (27) pour précharger le réservoir (27) à une pression interne donnée ; le jet de pulsation d'air comprimé a un front poussée de la même taille que l'avant du groupe (9) de cigarettes (2).

2. Machine selon la revendication 1, dans laquelle ledit front de poussée présente une intensité sensiblement uniforme.

3. Machine selon l'une quelconque des revendications 1 à 2, dans laquelle ledit jet de pulsation d'air comprimé est dirigé transversalement par rapport à ladite trajectoire (P) donnée.

4. Procédé pour rejeter des groupes (9) de cigarettes (2) ; le procédé prévoyant que les groupes (9) de cigarettes (2) sont, chacun, alimentés le long d'une trajectoire (P) donnée dans une poche ou siège (11) respectif des moyens de transport (10) vers une chaîne d'emballage (13) pour emballer des groupes (9) de cigarettes (2), et qu'une force est exercée, sur chaque groupe (9) de cigarettes (2) pour le rejet, pour expulser les groupes (9) de cigarettes (2) à partir de ladite trajectoire (P) ; le procédé étant **caractérisé en ce que** des moyens d'actionnement pneumatiques (26 ; 26') dirigent un jet de pulsation d'air comprimé sur chaque groupe (9) de cigarettes (2) pour le rejet, afin de dévier les groupes (9) de cigarettes (2) de ladite trajectoire (P) au moment du passage, ou pendant un arrêt dudit groupe (9) de cigarettes (2) en face des moyens d'actionnement pneumatiques (26 ; 26') en amont de la chaîne d'emballage (13), ledit jet de pulsation d'air comprimé a un front de poussée d'intensité sensiblement uniforme ; et de la même taille que l'avant du groupe (9) de cigarettes (2).

5. Procédé selon la revendication 4, dans lequel ledit jet de pulsation d'air comprimé est dirigé transversalement par rapport à ladite trajectoire (P) donnée.
